# FASCICULE DE BREVET EUROPEEN

(11) **EP 3 647 756 B1**
(45) Date de publication et mention de la délivrance du brevet: **15.09.2021**
(21) Numéro de dépôt: 19206412.9
(22) Date de dépôt: 31.10.2019
(51) Int. Cl.: G01M 1/04

(54) **OUTILLAGE POUR L'EQUILIBRAGE D'UN MODULE DE TURBOMACHINE COMPORTANT UN STATOR EN PORTE A FAUX**
WERKZEUG ZUM AUSGLEICH EINES TURBOMASCHINENMODULS MIT EINEM AUSKRAGENDEN STATOR
TOOLING FOR BALANCING A TURBOMACHINE MODULE HAVING A CANTILEVERD STATOR

(30) Priorité: 31.10.2018 FR 1860070
(43) Date de publication de la demande: 06.05.2020
(73) Titulaire: SAFRAN AIRCRAFT ENGINES, 75015 Paris (FR)
(72) Inventeur: LUINAUD, Alain, Roland, 77550 MOISSY-CRAMAYEL (FR); DECOCQ, Alain, 77550 MOISSY-CRAMAYEL (FR)
(74) Mandataire: Gevers & Orès

(56) Documents cités:
- WO-A1-2017/001745
- US-A- 4 586 225

## Description

L'invention se rapporte à une équilibreuse avec un outillage pour l'équilibrage d'un module de turbomachine dans une équilibreuse.

L'invention concerne plus particulièrement une équilibreuse avec un outillage pour l'équilibrage d'un module de turbomachine de masse élevée ou de grandes dimensions dans une équilibreuse horizontale, du type de celles utilisées dans le domaine de la motorisation aéronautique à des fins d'équilibrage de rotors de turbomachines aéronautiques.

### ETAT DE LA TECHNIQUE ANTERIEURE

Une turbomachine comporte de manière connue un ou plusieurs rotors qui sont montés tournants dans un stator.

Une turbomachine moderne actuelle est réalisée selon une conception modulaire et elle comporte à ce titre au moins un rotor qui est constitué d'une pluralité d'éléments fabriqués séparément et assemblés mécaniquement. De même, le stator d'une telle turbomachine est constitué d'une pluralité de carters de stators qui sont assemblés les uns aux autres.

Ainsi, une turbomachine est constituée d'un assemblage de modules dont au moins certains comportent au moins un carter de stator et un rotor associé qui comporte pour l'essentiel un arbre de rotor d'axe longitudinal A et au moins un étage d'aubes, qui est relié à une partie d'extrémité longitudinale dudit arbre de rotor, et qui est entouré par ledit carter de stator.

Par souci de simplification, dans la suite de présente description, on utilisera simplement le terme de "stator" pour désigner le carter de stator d'un module de turbomachine".

Conventionnellement, l'équilibrage d'un tel module de turbomachine est réalisé directement dans une équilibreuse, c'est-à-dire que les éléments constitutifs de ce module de turbomachine sont montés et supportés directement dans l'équilibreuse, sans interface de quelque sorte que ce soit.

Ainsi, le stator est fixé directement à un bâti de l'équilibreuse, et le rotor correspondant est supporté directement par des paliers de l'équilibreuse.

Cette configuration donne globalement satisfaction pour des modules de tailles réduites ou moyennes, mais n'est pas adaptée pour des modules de dimensions et de masses élevées pour lesquels l'encombrement et le poids représentent une contrainte en termes de manipulation dudit module dans ladite équilibreuse.

Par ailleurs, l'élévation de la masse du module associé à l'outillage nécessite de vérifier que les modes propres de l'ensemble se situent à l'extérieur du domaine d'utilisation de l'équilibreuse.

Il n'est en outre pas envisageable de déplacer manuellement un module de turbomachine de taille élevée pour l'installer dans l'équilibreuse sans risque de détérioration.

Les jeux fonctionnels entre l'étage d'aubes et le stator sont sensiblement les mêmes, que le module de turbomachine soit un module de dimension petite ou moyenne, ou un module de dimension élevée.

De ce fait, on comprend aisément qu'une manipulation d'un module de dimension élevée, plus susceptible d'entraîner un mouvement inapproprié du rotor par rapport au stator, pourrait conduire à des contacts inappropriés entre les aubes de l'étage d'aube et le stator, ce qui pourrait conduire à une détérioration dudit stator et dudit étage d'aubes.

Il est donc nécessaire de prévoir un outillage permettant le support d'un module de turbomachine, son levage, son transport et son installation dans l'équilibreuse, ceci à l'aide d'un nombre d'interfaces réduit permettant un transport sécurisé dudit module, sa dépose et sa fixation dans l'équilibreuse sans risque de dégradation. Un tel outillage a été proposé par le document WO-2017/001745-A1 mais il se révèle inadapté à des modules de dimension élevée présentant un porte à faux important.

Par ailleurs, l'équilibrage d'un module de turbomachine directement supporté par l'équilibreuse implique d'effectuer un certain nombre de réglages lors de l'installation de chaque module, ce qui accroît considérablement la durée totale d'une opération d'équilibrage. Il existe donc un besoin pour un outillage permettant de rationaliser les opérations d'équilibrage.

Enfin, certains modules de turbomachine comportent des rotors qui sont prévus pour être supportés par un palier situé axialement à l'intérieur de l'étage d'aubes et du stator. Par conséquent la mise en rotation du rotor par rapport à l'équilibreuse doit être réalisée au moyen d'un faux palier qui plonge à l'intérieur de l'étage d'aubes. Cette configuration implique un montage du module de turbomachine avec l'étage d'aubes en porte à faux par rapport aux paliers de guidage de l'équilibrage supportant l'arbre du rotor en rotation.

### EXPOSÉ DE L'INVENTION

L'invention satisfait à ce besoin en proposant une équilibreuse avec un outillage pour l'équilibrage d'un module de turbomachine dans l'équilibreuse, ledit module comportant au moins un stator et un rotor comportant un arbre d'axe longitudinal A configuré pour être guidé par un palier de guidage à l'intérieur du stator et au moins un étage d'aubes qui est relié à une partie d'extrémité longitudinale dudit arbre et qui est entouré par ledit stator, ladite équilibreuse comportant au moins de l'avant vers l'arrière, par convention selon un sens d'avant en arrière associé à un sens d'écoulement d'un flux de gaz traversant le module lorsqu'il est monté dans la turbomachine à laquelle il est associé, un bloc d'entraînement et une table munie de deux supports avant et arrière de maintien de l'arbre du module, caractérisé en ce que ledit outillage comporte au moins :
- un support de stator, destiné à être fixé de manière axialement réglable sur la table de l'équilibreuse en arrière des supports de guidage en rotation,
- un faux-palier tubulaire, configuré pour porter un palier de guidage du rotor dans le stator et comportant une portée avant de fixation configurée pour s'étendre hors du stator,
- un manchon de guidage, comportant une extrémité arrière configurée pour emprisonner la portée avant de fixation du faux palier, une extrémité avant comportant des moyens internes de guidage de l'arbre du rotor, et qui est configuré pour être reçu sur les supports avant et arrière de la table de l'équilibreuse,
- un plateau arrière de support du stator, destiné à être fixé à la platine arrière du support du stator, et comportant des moyens d'immobilisation du rotor par rapport au stator,
- un plateau avant de support du stator, destiné à être fixé à la platine avant du support du stator, et comportant des moyens d'immobilisation et de centrage du faux palier.

Selon d'autres caractéristiques de l'équilibreuse et de son outillage :
- le support de stator comporte deux platines avant et arrière réglables verticalement et transversalement de manière indépendante et configurées pour supporter des extrémités avant et arrière dudit stator,
- le plateau arrière présente la forme d'un disque percé d'une ouverture circulaire en son centre, qui comporte :
   - un pied inférieur de fixation à la platine arrière,
   - des moyens de fixation du stator sur sa périphérie extérieure, et
   - des bras radiaux, réglables radialement en coulissement, qui s'étendent radialement vers l'intérieur à partir des bords de l'ouverture circulaire du plateau arrière et qui comportent à leurs extrémités libres des touches axiales qui sont configurées pour s'étendre axialement à l'intérieur d'un tourillon du rotor et pour coopérer avec une portée intérieure dudit tourillon pour l'immobiliser par rapport au stator,
- le plateau avant présente la forme d'un disque percé d'une ouverture circulaire en son centre, et qui comporte :
   - un pied inférieur de fixation à la platine avant,
   - des moyens de fixation du stator sur sa périphérie extérieure, et
   - au moins trois bras radiaux, réglables radialement en coulissement, qui s'étendent radialement vers l'intérieur à partir des bords de l'ouverture circulaire du plateau avant, et qui comportent à leurs extrémités libres des portées en forme de tronçons angulaires de cylindre qui sont complémentaires d'une périphérie extérieure du faux palier,
- le faux palier tubulaire comporte une portée intérieure arrière formant une piste du palier de guidage du rotor, et sur sa périphérie, en arrière de sa portée extérieure de fixation au manchon, une gorge extérieure de réception des extrémités des bras radiaux du plateau avant,
- le manchon de guidage tubulaire est réalisé sous la forme de deux coques respectivement inférieure et supérieure, jointives selon un plan horizontal et configurées pour être fixées l'une à l'autre, qui comportent chacune à leur extrémité arrière un logement interne semi-cylindrique complémentaire de la portée avant de fixation du faux palier, ladite coque inférieure comportant à l'extérieur de chacune de ses extrémités avant et arrière des moyens de fixation aux supports arrière et avant de maintien de l'équilibreuse, et, à l'intérieur de son extrémité avant, une platine transversale porteuse de deux galets d'axe longitudinal sur lesquels l'arbre du module est destiné à rouler, la position de ladite platine étant réglable verticalement et transversalement par rapport à ladite extrémité avant de la coque inférieure du manchon de guidage,

L'invention concerne aussi une équilibreuse avec un outillage et un ensemble d'étalonnage pour le réglage dudit outillage, caractérisés en ce que l'ensemble d'étalonnage comporte un rotor étalon, de moment d'inertie et de balourd correspondant sensiblement au rotor du module à équilibrer, comportant une masse de rotor étalon et un arbre de rotor étalon, et une bague d'adaptation configurée pour recevoir une extrémité arrière de l'arbre de rotor étalon et pour être reçue dans le support arrière de l'équilibreuse.

L'invention concerne aussi un procédé d'équilibrage d'un rotor étalon d'une équilibreuse avec outillage et ensemble d'étalonnage du type décrit précédemment, caractérisé en ce qu'il comporte une première étape au cours de laquelle on insère le rotor étalon dans la bague d'adaptation, une deuxième étape au cours de laquelle on dispose le rotor étalon dans le support arrière de l'équilibreuse et au cours de laquelle on l'accouple au bloc d'entraînement, et une troisième étape au cours de laquelle on équilibre le rotor étalon.

L'invention concerne aussi un procédé de réglage d'un manchon tubulaire et d'un support de stator à l'aide d'un rotor étalon qui appartiennent à une équilibreuse avec outillage et ensemble d'étalonnage du type décrits précédemment, caractérisé en ce qu'il comporte :
- une première étape au cours de laquelle on insère le rotor étalon dans le faux palier,
- une deuxième étape au cours de laquelle on insère le faux palier muni de l'arbre de rotor étalon dans le manchon de guidage tubulaire,
- une troisième étape au cours de laquelle on dépose le rotor étalon muni du manchon de guidage tubulaire dans les supports avant et arrière de l'équilibreuse,
- une quatrième étape au cours de laquelle on met en rotation le rotor étalon pour déterminer son défaut d'axe et au cours de laquelle on corrige ledit défaut en réglant les positions transversale et horizontale de la platine du manchon de guidage tubulaire,
- une cinquième étape au cours de laquelle on démonte le rotor étalon du faux palier et le faux palier du manchon de guidage,
- une sixième étape au cours de laquelle on assemble le plateau avant de support du stator au faux palier,
- une septième étape au cours de laquelle on insère le rotor étalon dans le faux palier,
- une huitième étape au cours de laquelle on assemble le stator au plateau avant et le plateau arrière au stator pour constituer un module étalon,
- une neuvième étape au cours de laquelle on assemble le manchon de guidage au faux palier,
- une dixième étape au cours de laquelle on dépose le module étalon équipé du manchon de guidage sur les supports arrière et avant de maintien de l'arbre du module et sur le support de stator,
- une onzième étape au cours de laquelle on règle les platines avant et arrière du support de stator de manière à supporter les plateaux avant et arrière de support du stator tout en permettant la libre rotation du rotor étalon dans le stator.

L'invention concerne aussi un procédé d'équilibrage d'un module de turbomachine à l'aide d'une équilibreuse avec outillage du type décrit précédemment, caractérisé en ce qu'il comporte :
- une première étape au cours de laquelle on assemble le plateau avant de support du stator au faux palier,
- une deuxième étape au cours de laquelle on insère le rotor dans le faux palier,
- une troisième étape au cours de laquelle on assemble le stator au plateau avant et le plateau arrière au stator,
- une quatrième étape au cours de laquelle on assemble le manchon de guidage au faux palier,
- une cinquième étape au cours de laquelle on dépose le module équipé du manchon de guidage sur les supports arrière et avant de maintien de l'arbre du module et sur le support de stator,
- une sixième étape d'équilibrage du module dans l'équilibreuse.

Selon une autre caractéristique de ce procédé, au cours de la première étape on assemble le plateau avant de support du stator au faux palier sur une table d'assemblage comportant un plateau de montage en forme de disque complémentaire du plateau avant de support du stator, comportant une ouverture circulaire en son centre, sur les bords de laquelle sont disposées au moins trois pattes de centrage s'étendant axialement à partir dudit plateau de montage et disposées selon un diamètre correspondant à celui d'une portée extérieure du faux palier, et au cours de ladite première étape, le faux palier est reçu entre les pattes de centrage de la table d'assemblage puis on assure la coaxialité du plateau avant avec le faux palier en réglant les bras .

### BREVE DESCRIPTION DES FIGURES

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue de côté d'un module de turbomachine équipé d'un outillage d'équilibrage selon l'invention et reçu sur une table d'une équilibreuse ;
- la figure 2 est une vue en perspective d'un module de turbomachine équipé d'un plateau arrière de support du stator pour un outillage d'équilibrage selon l'invention ;
- la figure 3 est une vue en perspective d'un module de turbomachine équipé d'un plateau avant de support du stator pour un outillage d'équilibrage ;
- la figure 4 est une vue en perspective d'un module de turbomachine équipé d'un faux palier tubulaire et d'un manchon de guidage selon l'invention ;
- la figure 5 est une vue en perspective d'un support de stator selon l'invention ;
- les figures 6A à 6D sont des vues en perspective illustrant les étapes de l'équipement d'un module de turbomachine préalablement à son équilibrage ;
- la figure 6E est une vue en perspective illustrant une étape d'équipement de la table de l'équilibreuse avec le support de stator ;
- la figure 6F est une vue en perspective illustrant une étape de dépose du module de turbomachine sur la table de l'équilibreuse ;
- la figure 6G est une vue en perspective illustrant une étape d'équilibrage du module de turbomachine dans l'équilibreuse ;
- la figure 6H est une vue en perspective de l'extrémité avant d'un manchon de guidage d'un outillage selon l'invention ;
- la figure 7A est une vue en perspective d'un rotor étalon ;
- la figure 7B est une vue en perspective d'un bague d'adaptation pour un rotor étalon de la figure 7A;
- les figures 7C et 7D sont des vues en perspective représentant une étape de mise en place dans l'équilibreuse du rotor étalon de la figure 7A et d'équilibrage dudit rotor étalon ;
- les figures 8A à 8C sont des vues en perspective représentant des étapes de mise en place du rotor étalon de la figure 7A dans un manchon de guidage ;
- les figures 8D à 8E sont des vues en perspective représentant des étapes de mise en place dans l'équilibreuse du rotor étalon, monté dans le faux palier et le manchon de guidage, et de réglage dudit rotor étalon ;
- les figures 9A à 9D sont des vues en perspective représentant des étapes d'assemblage d'un module de turbomachine étalon comprenant un rotor étalon et un stator, et de réglage de la position du stator de ce module étalon dans l'équilibreuse ;

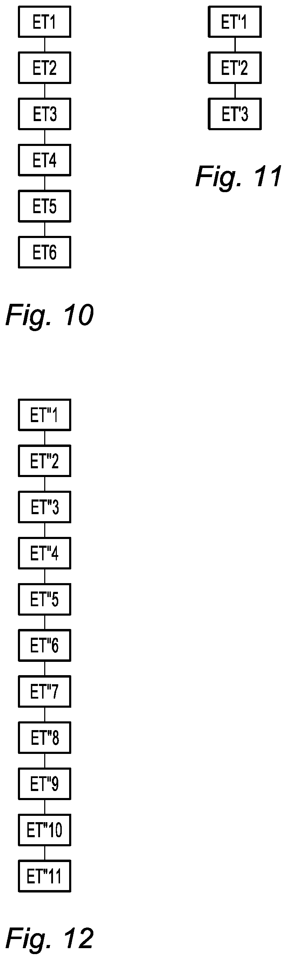

- la figure 10 est un diagramme-bloc illustrant les étapes d'un procédé d'équilibrage d'un module de turbomachine ;
- la figure 11 est un diagramme-bloc illustrant les étapes d'un procédé d'équilibrage d'un rotor étalon ;
- la figure 12 est un est un diagramme-bloc illustrant les étapes d'un procédé de réglage d'un manchon tubulaire et d'un support de stator de l'outillage selon l'invention.

Dans la description qui va suivre, des chiffres de références identiques désignent des pièces identiques ou ayant des fonctions similaires. Les orientations longitudinale, transversale, et verticale des figures sont définies par référence à un trièdre X, Y, Z, dans lequel l'axe X longitudinal est un axe parallèle à l'axe longitudinal A du module de la turbomachine, l'axe Y est un axe transversal à l'axe X, horizontal et parallèle à la table de l'équilibreuse et l'axe Z, et l'axe Z est un axe transversal à l'axe X, vertical et perpendiculaire à la table de l'équilibreuse.

Les orientations avant et arrière sont définies par référence à un sens d'avant en arrière, représenté par une flèche F sur les figures, correspondant à un sens d'écoulement d'un flux de gaz traversant le module lorsqu'il est monté dans la turbomachine à laquelle il est associé.

### DESCRIPTION DETAILLEE

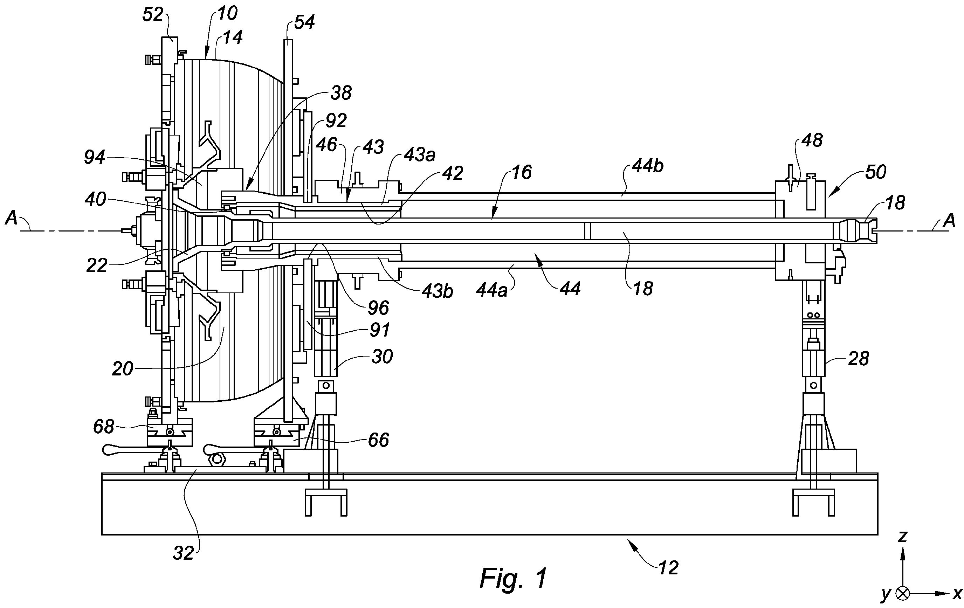

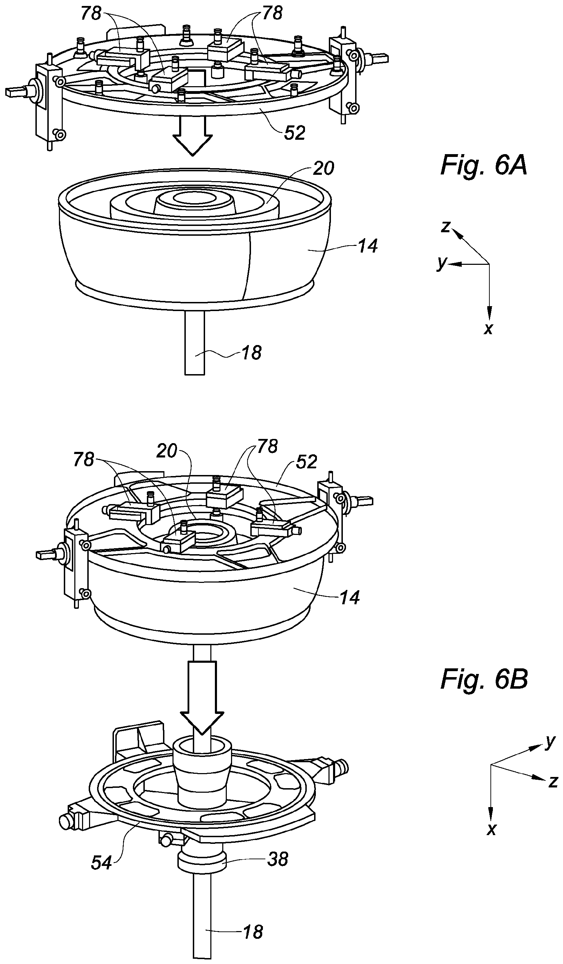

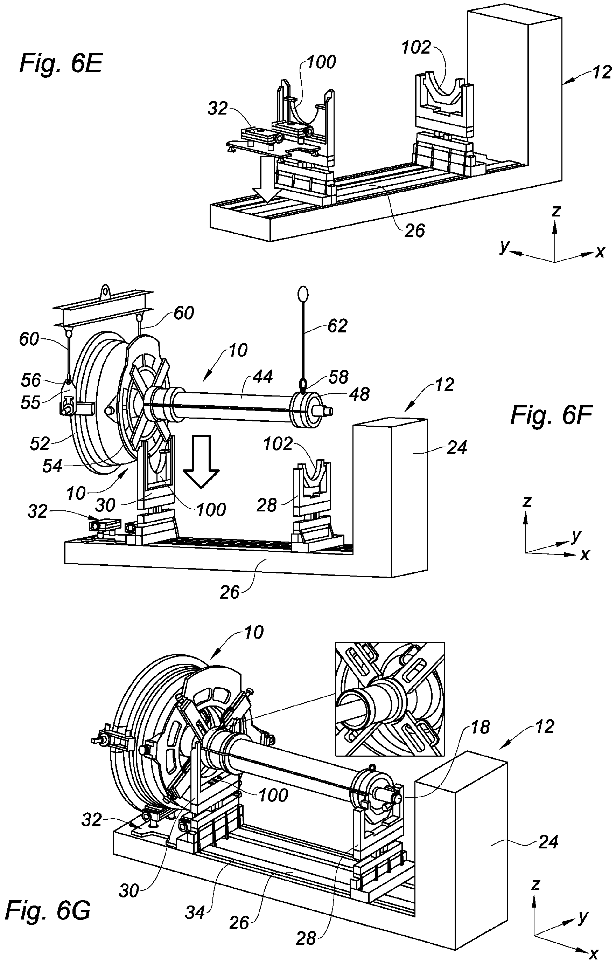

On a représenté aux figures 1 et 6G un outillage pour l'équilibrage d'un module 10 de turbomachine dans une équilibreuse 12.

De manière connue, le module 10 comporte au moins un carter de stator 14, qui sera appelé par la suite stator 14, et un rotor 16 comportant un arbre 18 d'axe longitudinal A configuré pour être guidé par un palier de guidage (non représenté) à l'intérieur du stator 14. Le module 10 comporte au moins un étage d'aubes 20 qui est relié à une partie d'extrémité 22 longitudinale de l'arbre 18 et qui est entouré par le stator 14.

De manière connue, comme l'illustre la figue 6G, l'équilibreuse 12 comporte au moins, de l'avant vers l'arrière, un bloc d'entraînement 24 et une table 26, d'axe X parallèle à l'axe A, qui est munie de deux supports avant 28 et arrière 30 de maintien de l'arbre du module 10.

Le palier de guidage du rotor 16 est destiné à occuper une position axiale qui est sensiblement agencée dans le stator 14 une fois que le rotor 16 a été placé dans sa position de fonctionnement par rapport au stator 14. De ce fait, ce positionnement implique un montage en porte-à-faux du stator 14 et de l'étage d'aubes 20 par rapport au support avant 28 de maintien du module. Ce montage implique donc différents éléments aptes à assurer le maintien du module 10 sur la table 26 de l'équilibreuse.

Conformément à l'invention, comme l'illustre la figure 1, l'outillage comporte au moins un support de stator 32, qui est destiné à être fixé de manière axialement réglable sur la table 26 de l'équilibreuse 12 en arrière des supports de maintien 28 et 30 de l'arbre du module. La table 26 comporte à cet effet des rainures 34 dans lesquelles sont reçues et verrouillées des brides 36 du support de stator 32, de manière à permettre le réglage du support de stator 32 suivant la direction X.

Comme l'illustre la figure 1, l'outillage comporte aussi un faux-palier tubulaire 38, configuré pour porter un palier de guidage provisoire 40 du rotor 16 dans le carter de stator 14, et comportant une portée avant 42 de fixation configurée pour s'étendre hors du stator 14.

L'outillage comporte en outre un manchon de guidage 44, comportant une extrémité arrière 46 configurée pour emprisonner la portée avant 42 de fixation du faux palier 38 et une extrémité avant 48 comportant des moyens internes de guidage 50 de l'arbre 18 du rotor 16.

La portée avant 42 du faux palier 38 est notamment complémentaire d'une portée annulaire 43 agencée à l'intérieur du manchon de guidage 44.

Le manchon de guidage 44 est configuré pour être reçu sur les supports arrière 30 et avant 28 de la table 26 de l'équilibreuse 12. Les moyens internes de guidage 50 permettent un réglage vertical selon la direction Z et un réglage transversal selon la direction Y de l'arbre de rotor 18 qui les traversent.

L'outillage comporte par ailleurs un plateau arrière 52 de support du stator qui est destiné à être fixé au support du stator 32, et comportant des moyens d'immobilisation du rotor 16 par rapport au stator 14.

L'outillage comporte enfin un plateau avant 54 de support du stator 14, qui est destiné à être fixé également au support du stator 32, et qui comporte des moyens d'immobilisation et de centrage du faux palier 38.

Comme l'illustre la figure 6F, le plateau arrière 52 de support du stator et l'extrémité avant 48 du manchon de guidage 44 comportent des points d'ancrage 56, 58 destinés à permettre la fixation d'élingues respectives 60, 62 permettant le transport du module 10. Les points d'ancrage 56 du plateau arrière 52 sont par exemple agencés dans deux plaques 55 transversalement opposées et fixées de part et d'autre du plateau arrière 52 et le point d'ancrage 58 de l'extrémité avant du manchon de guidage 44 est par exemple un piton fixé à cette extrémité 48.

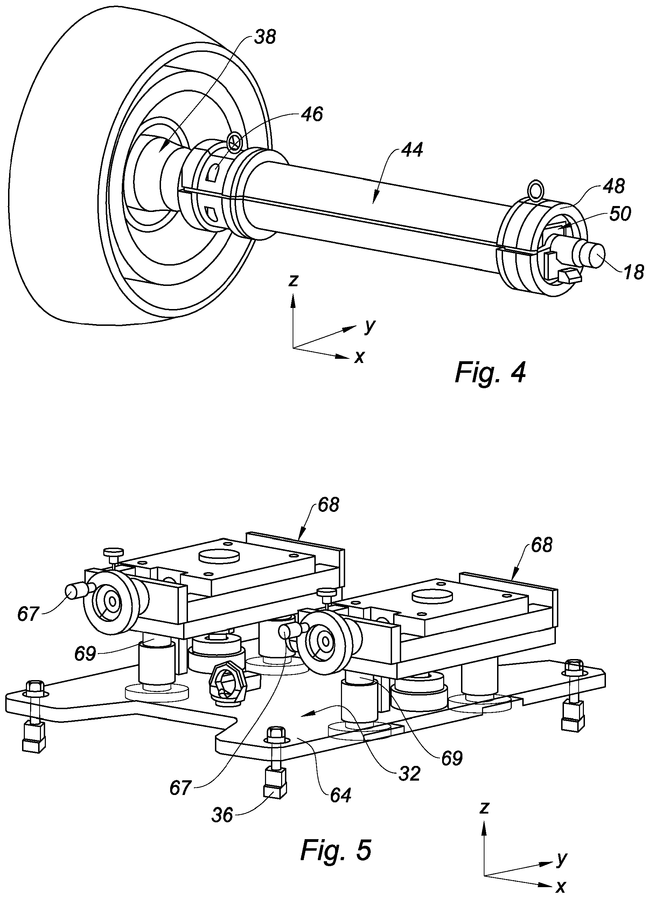

Il sera donc compris que lorsque le module 10 est reçu dans l'outillage, il peut être déplacé à l'aide des élingues 60, 62 pour être descendu sur les supports de maintien 28 et 30 et être ainsi installé dans l'équilibreuse 12. On va à présent décrire de manière plus précise ces différents éléments. De manière préférentielle de l'invention, comme l'illustre la figure 5, le support de stator 32 comporte une embase 64 recevant deux platines avant 66 et arrière 68 réglables verticalement selon la direction Z et transversalement selon la direction Y de manière indépendante, qui sont configurées pour supporter des extrémités avant et arrière du stator 14. Plus particulièrement, les platines 66 et 68 sont destinées à recevoir respectivement les plateaux avant 54 et arrière 52 de support du stator 14. Les platines sont réglables, par exemple, au moyen de manivelles 67, de manière à permettre leur coulissement transversal et leur montée ou descente sur des colonnes 69.

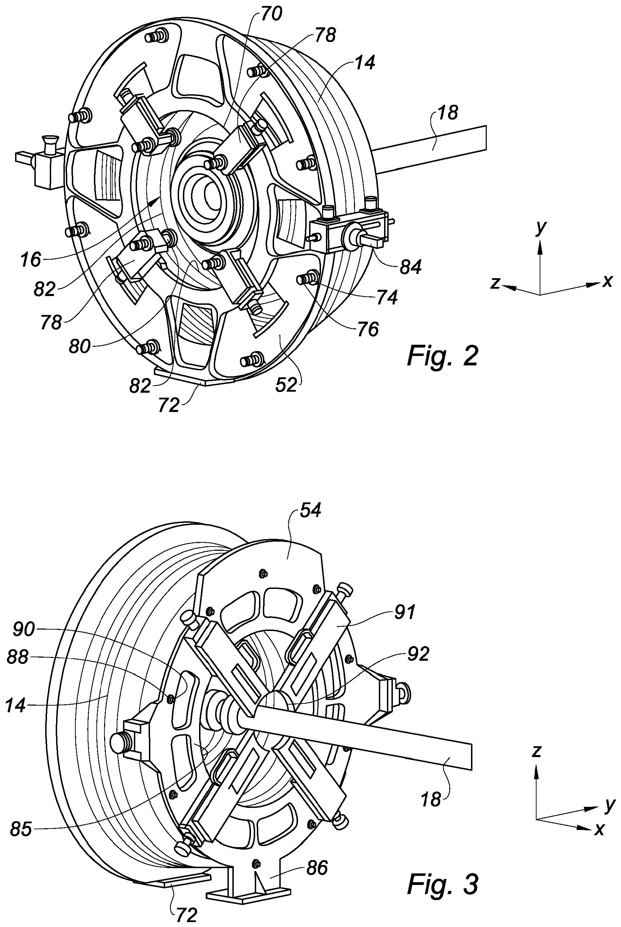

Comme l'illustre la figure 2, le plateau arrière 52, quant à lui, présente la forme d'un disque percé d'une ouverture circulaire 70 en son centre. Il comporte un pied inférieur 72 de fixation à la platine arrière 68, notamment par boulonnage. Il comporte également des moyens de fixation du stator 14 sur sa périphérie extérieure, par exemple des perçages 74 aptes à permettre le passage de vis de fixation 76 sur le carter de stator 14. Il comporte également des bras radiaux 78, réglables radialement en coulissement, qui s'étendent radialement vers l'intérieur à partir des bords de l'ouverture circulaire 70 du plateau arrière 52 et qui comportent à leurs extrémités libres des touches axiales 80 qui sont configurées pour s'étendre axialement à l'intérieur d'un tourillon de l'étage d'aubes 20 du rotor 16 et pour coopérer avec une portée intérieure 82 dudit tourillon pour l'immobiliser par rapport au stator 14. De préférence, les bras radiaux 78 sont au nombre de quatre, mais cette configuration n'est pas limitative de l'invention.

Enfin, le plateau arrière 52 comporte deux attaches 84 opposées transversalement qui sont aptes à recevoir les plaques 55 comportant les points d'ancrages 56.

Le plateau avant 54, pour sa part, présente la forme d'un disque percé d'une ouverture circulaire 85 en son centre. Il comporte un pied inférieur 86 de fixation à la platine avant 66. Il comporte également des moyens de fixation du stator sur sa périphérie extérieure, par exemple des perçages 88 aptes à permettre le passage de vis de fixation 90 sur le stator 14.

Le plateau avant 54 comporte au moins trois bras radiaux 91), réglables radialement en coulissement, qui s'étendent radialement vers l'intérieur à partir des bords de l'ouverture circulaire 85 du plateau avant, et qui comportent à leurs extrémités libres des portées 92 en forme de tronçons angulaires de cylindre qui sont complémentaires d'une périphérie extérieure du faux palier 38. Le réglage des bras 91 permet donc de faire varier la position transversale et verticale du faux palier 38 et son excentration par rapport au centre de l'ouverture circulaire 85. De préférence, les bras radiaux 91 sont au nombre de quatre, mais cette configuration n'est pas limitative de l'invention.

Comme on l'a vu le faux palier tubulaire 38 est configuré pour porter un palier de guidage provisoire 40 du rotor 16 dans le stator 14, c'est-à-dire qu'il reproduit les caractéristiques d'un carter de la turbomachine auquel le module 10 sera monté. A cet effet, comme l'illustre la figure 1, le faux palier 38 comporte une portée intérieure arrière 94 formant une piste extérieure du palier de guidage 40 du rotor 16.

Par ailleurs, pour permettre son centrage dans le stator 14, le faux palier 38 comporte sur sa périphérie, en arrière de sa portée extérieure 42 de fixation au manchon de guidage 14, une gorge extérieure de réception 96 des extrémités 92 des bras radiaux 91 du plateau avant 54.

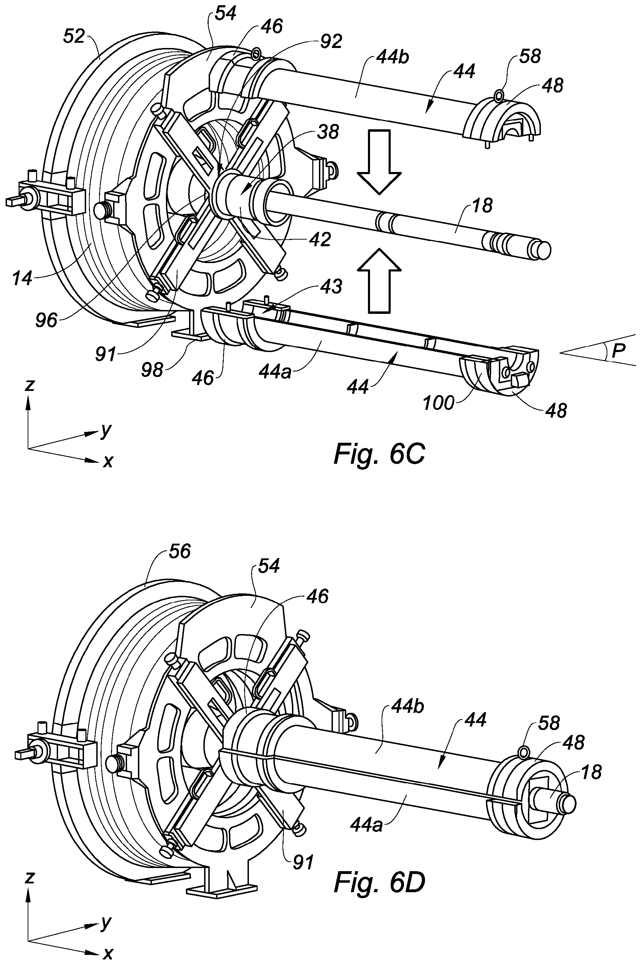

Pour assurer la fixation du faux palier 38 dans le manchon 44, comme l'illustre la figure 6C, le manchon de guidage tubulaire 44 est réalisé sous la forme de deux coques 44a et 44b respectivement inférieure et supérieure, jointives selon un plan horizontal P et configurées pour être fixées l'une à l'autre.

Comme l'illustre la figure 6C, chaque coque 44a, 44b comporte à son extrémité arrière une portée annulaire 43 conformée sous la forme d'un logement interne semi-cylindrique complémentaire de la portée arrière de fixation 42 du faux palier 38 qui, quant à elle, forme un épaulement de diamètre complémentaire.

En variante, comme l'illustre la figure 1, chaque coque 44a, 44b peut comporter à son extrémité arrière une portée 43a, 43b semi-cylindrique formant un épaulement s'étendant radialement vers l'intérieur du manchon tubulaire 44 et complémentaire d'une portée avant de fixation 42 du manchon tubulaire qui est conformée en forme de gorge de diamètre complémentaire.

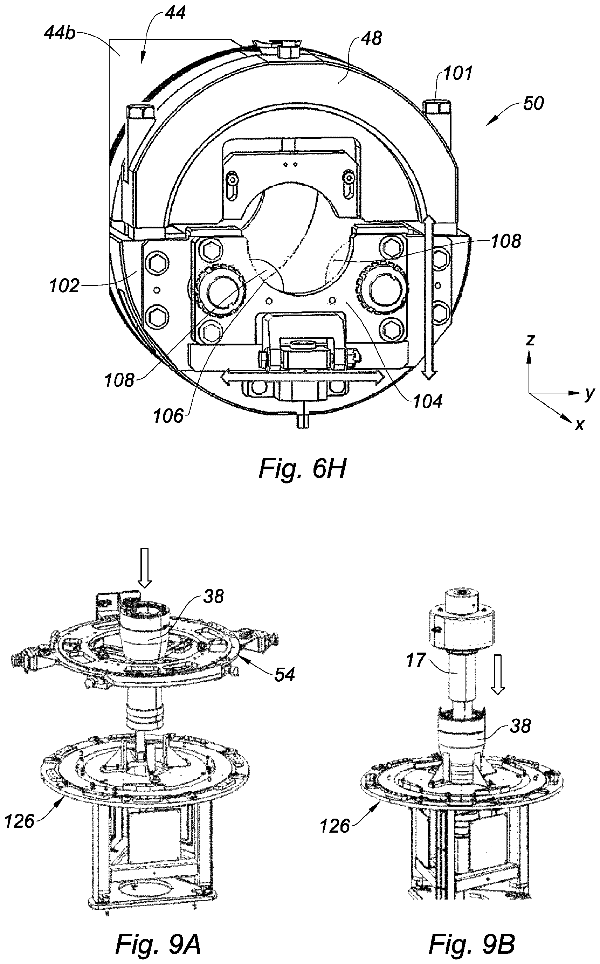

Dans les deux cas, la portée 43 du manchon tubulaire permet d'emprisonner la portée 42 du faux palier 38.Comme l'illustrent les figures 6C et 6D, la coque inférieure 44a comporte à l'extérieur de chacune de ses extrémités arrière 46 et avant 48 des moyens de fixation arrière 98 et avant 100 aux supports arrière 30 et avant 28 de maintien de l'équilibreuse. Par exemple, ces moyens de fixation sont des filetages destinés à permettre la réception de vis de fixation 101, représentées à la figure 6H, qui traversent des cavaliers 100 arrière et 102 avant complémentaires de la périphérie du manchon 44 au niveau de ses extrémités arrière 46 et avant 48, qui ont été représentés aux figures 6E à 6H.

Par ailleurs, comme l'illustre la figure 6C et plus particulièrement la figure 6H, la coque inférieure 44a comporte à l'intérieur de son extrémité avant 48 une platine transversale 104 comportant une ouverture 106, permettant le passage de l'arbre 18 du module du rotor, et porteuse de deux galets 108 d'axe longitudinal sur lesquels l'arbre 18 du module du module peut rouler. La position de cette platine 104 étant réglable verticalement et transversalement, comme indiqué par les flèches de la figure 6H, par rapport à l'extrémité avant 48 de la coque inférieure 44a du manchon de guidage 44, pour permettre de modifier la position de l'arbre 18.

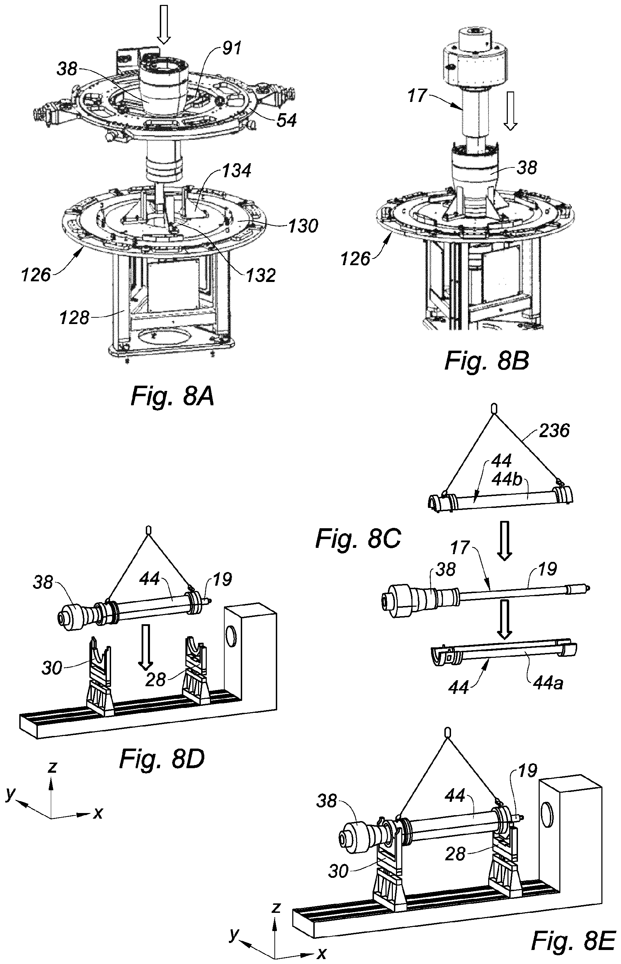

Pour permettre l'assemblage des plateaux arrière 52 et avant 54 au stator, et l'assemblage du faux palier 38 au rotor 16, l'outillage comporte également une table d'assemblage 126, qui a été représentée à la figure 8A. Cette table d'assemblage comporte pour l'essentiel un piétement 128 et un plateau 130, percé d'une ouverture 132 de diamètre supérieur à l'arbre 18 du rotor mais inférieur à celui du faux palier 38, autour de laquelle sont distribuées des pattes de centrage 134 du palier faux 38 selon un diamètre correspondant à celui d'une portée extérieure du faux palier 38.

Le plateau 130 est complémentaire d'un diamètre du plateau avant 54 de support du stator, de sorte que, lorsque le faux palier 38 est reçu entre les pattes de centrage 134, il permet d'ajuster la position du plateau arrière 56 en réglant les bras 91 pour assurer la coaxialité du plateau avant 54 avec le faux palier 38.

Dans cette configuration, pour procéder à l'équilibrage d'un module 10 de turbomachine à l'aide d'un outillage du type décrit précédemment, on suit d'abord une première étape ET1 au cours de laquelle on assemble le plateau avant 54 au faux palier 38, de la manière précédemment décrite, comme représenté à la figure 8A. Puis, au cours d'une deuxième étape ET2, on assemble le plateau arrière 52 de support du stator au stator 14 et à l'étage d'aubes 20 en le bloquant à l'aide des bras 78, comme représenté à la figure 6A, et, au cours d'une troisième étape ET3 on insère l'arbre 18 dans le faux palier 38 et assemble le plateau arrière 52 de support de stator, le stator 14 et l'étage d'aubes 20 déjà assemblés au plateau avant 54 et au faux palier 38. On peut alors, au cours d'une quatrième étape ET4, assembler le manchon de guidage 44 au faux palier 38, comme représenté à la figure 6C pour obtenir l'ensemble assemblé de la figure 6D. Au préalable, le support de stator 32 été fixé à la table 26 de l'équilibreuse, comme représenté par les flèches de la figure 6E.

S'ensuit alors une cinquième étape ET5, représentée à la figure 6F, au cours de laquelle on dépose le module 10 équipé de l'outillage sur les supports arrière 30 et avant 28 de maintien de l'arbre du module et sur le support de stator 32, comme représenté à la figure 6F. Enfin, au cours d'une sixième étape ET6, on procède à d'équilibrage du module 10 dans l'équilibreuse 12, comme représenté à la figure 6G.

Un parfait équilibrage du module 10 de turbomachine suppose que la position du stator 14 soit parfaitement définie par rapport à la table 26 de l'équilibreuse. Pour cela, il est nécessaire d'en assurer le réglage, et ce réglage doit être effectué par rapport à un manchon tubulaire 44 parfaitement centré par rapport à un rotor étalon servant de référence.

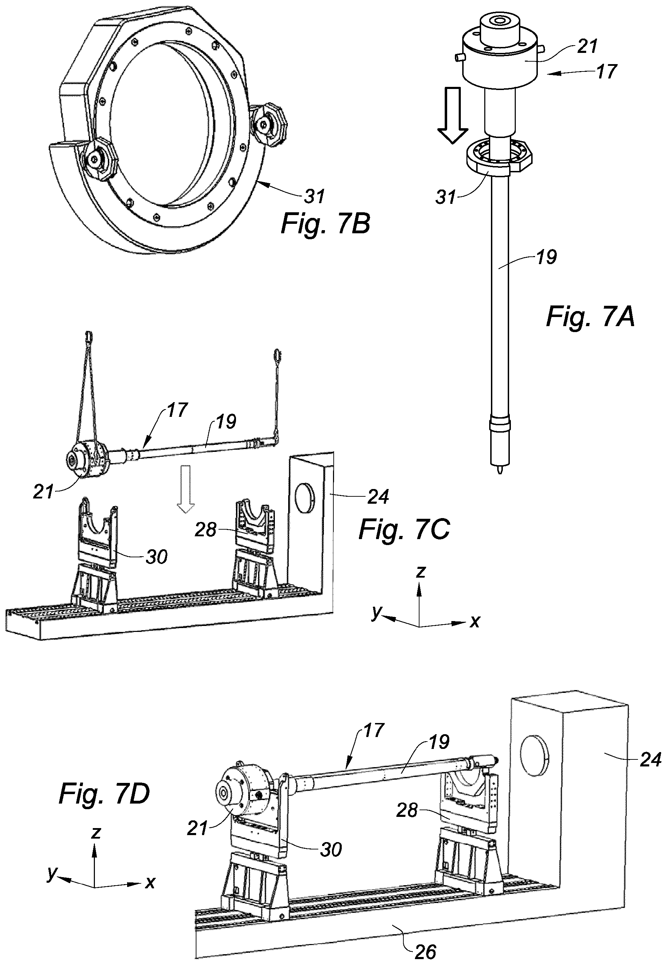

A cet effet, on propose un ensemble d'étalonnage pour le réglage de l'outillage précédemment décrit. Les éléments de cet ensemble d'étalonnage ont été représentés aux figures 7A et 7B. Ils comportent un rotor étalon 17, de moment d'inertie et de balourd correspondant sensiblement au rotor 16 du module 20 à équilibrer. Ce rotor étalon comporte une masse 21 de rotor étalon et un arbre 19 de rotor étalon.

L'ensemble d'étalonnage comporte une bague d'adaptation 31 qui est configurée pour recevoir une extrémité arrière de l'arbre 19 de rotor étalon et pour être reçue dans le support arrière 30 de l'équilibreuse 12.

Le rotor étalon doit en premier lieu être équilibré. A cet effet, au cours d'une première étape ET'1 d'un procédé d'équilibrage du rotor étalon 17, on insère l'arbre 19 du rotor étalon 17 dans la bague d'adaptation 31 comme représenté à la figure 7A.

Puis, au cours d'une deuxième étape ET'2 on dispose le rotor étalon 17 dans le support arrière 30 de l'équilibreuse et au cours de laquelle on l'accouple au bloc d'entraînement 24, et une troisième étape ET'3 au cours de laquelle on équilibre le rotor étalon 17, comme représenté à la figure 7D. Ceci fait, il est alors possible de vérifier le réglage du manchon tubulaire 44 et de régler le support de stator 32.

Au cours d'une première étape ET"1 d'un procédé de réglage du manchon tubulaire 44 et du support de stator 32 qui a été représentée à la figure 8B, on insère le rotor étalon 17 dans le faux palier 38. Au préalable, on a utilisé la table d'assemblage 126 pour séparer le faux palier 38 du plateau avant 54, comme représenté à la figure 8A.

Puis au cours d'une deuxième étape ET"2, on insère le faux palier 38 muni de l'arbre de rotor étalon dans les coques 44a, 44b du manchon 44 de guidage tubulaire et on le suspend à des élingues 136, comme représenté à la figure 8C. On dépose alors le rotor 17 étalon muni du manchon 44 de guidage tubulaire dans les supports avant 28 et arrière 30 de l'équilibreuse au cours d'une troisième étape ET"3, comme représenté à la figure 8D. Enfin, au cours d'une quatrième étape ET"4, on met en rotation le rotor étalon pour déterminer son défaut d'axe dans le manchon 44 et au cours de cette étape on corrige ce défaut en réglant les positions transversale et horizontale de la platine 106 du manchon 44 de guidage tubulaire précédemment représenté à la figure 6H.

Ce défaut d'axe corrigé, on peut alors assembler un module étalon 11 permettant de régler les platines avant et arrière du support de stator 32, c'est-à-dire un module composé du stator 14 et du rotor étalon 17.

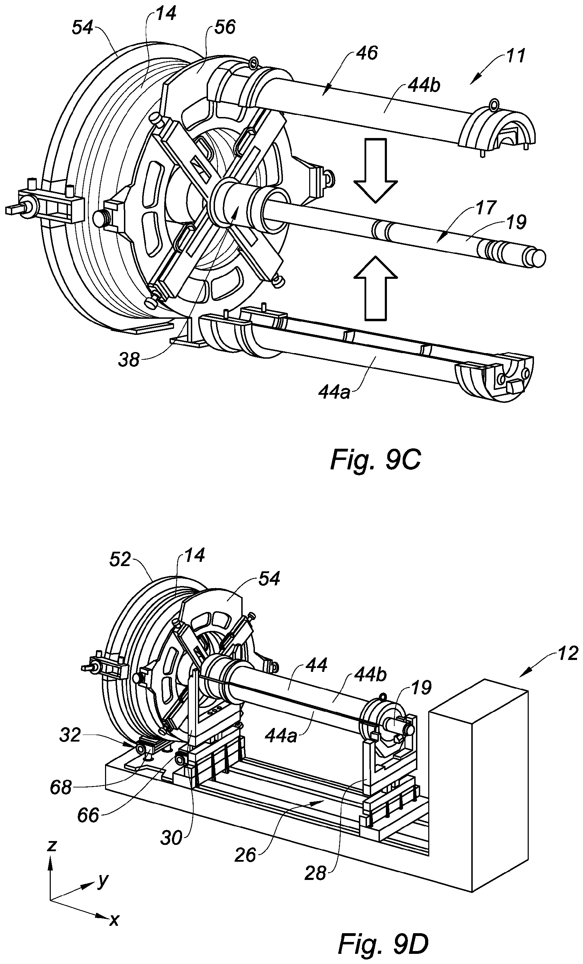

Pour ce faire, au cours d'une cinquième étape ET"5 (non représentée) on démonte le rotor étalon 17 du faux palier 38 et le faux palier des coques 44a, 44b du manchon de guidage 44. Puis, au cours d'une sixième étape ET"6 qui a été représentée à la figure 9A, on règle le plateau avant 54 de support du stator par rapport au faux palier 38. Puis, au cours d'une septième étape ET"7 au cours de laquelle on insère le rotor étalon 17 dans le faux palier 38, comme représenté à la figure 9B. S'ensuit une huitième étape ET"8 au cours de laquelle on assemble le stator 14 au plateau avant 54 et le plateau arrière 52 au stator 14, pour constituer un module étalon 11 équipé de son outillage comme représenté à la figure 9C.

Puis, au cours d'une neuvième étape ET"9 (non représentée), on assemble les deux parties 44a, 44b du manchon de guidage 44 au faux palier 38. On peut alors, au cours d'une dixième étape ET"10 (non représentée) déposer le module 11 équipé de l'outillage sur les supports avant 28 et arrière 30 de maintien et sur le support 32 de stator. On peut alors, au cours d'une onzième étape ET"11, régler les platines avant 66 et arrière 68 du support de stator 32 de manière à supporter les plateaux avant 54 et arrière 52 de support du stator 32 tout en permettant la libre rotation de l'arbre 19 du rotor étalon 17 du module étalon 11 dans le stator 14.

Ce réglage permet de disposer d'un outillage réglé prêt à effectuer l'équilibrage d'un rotor 10 comme précédemment décrit en référence aux étapes ET1 à ET6.

L'invention permet de simplifier considérablement les opérations d'équilibrage d'un module 10 de turbomachine comportant un stator 14 en porte à faux par rapport aux supports 28, 30 d'une équilibreuse 12.

## Revendications

1. Equilibreuse avec un outillage pour l'équilibrage d'un module (10) de turbomachine dans l'équilibreuse (12), ledit module comportant au moins un stator (14) et un rotor (16) comportant un arbre (18) d'axe longitudinal A configuré pour être guidé par un palier de guidage à l'intérieur du stator et au moins un étage d'aubes (20) qui est relié à une partie d'extrémité (22) longitudinale dudit arbre (18) et qui est entouré par ledit stator (14), et ladite équilibreuse (12) comportant au moins, de l'avant vers l'arrière, un bloc d'entraînement (24) et une table (26) munie de deux supports avant (28) et arrière (30) de maintien de l'arbre (18) du module (10), **caractérisés en ce que** ledit outillage comporte au moins :
- un support de stator (32), destiné à être fixé de manière axialement réglable sur la table (26) de l'équilibreuse (12) en arrière des supports (28, 30) de maintien de l'arbre (18) du module (10),
- un faux-palier tubulaire (38), configuré pour porter un palier de guidage (40) du rotor (16) dans le stator (14) et comportant une portée avant de fixation (42) configurée pour s'étendre hors du stator (14),
- un manchon de guidage (44), comportant une extrémité arrière (46) configurée pour emprisonner la portée avant de fixation (42) du faux palier (38), une extrémité avant (48) comportant des moyens internes de guidage (50) de l'arbre (18) du rotor, et qui est configuré pour être reçu sur les supports arrière (30) et avant (28) de la table (26) de l'équilibreuse (12),
- un plateau arrière (52) de support du stator (14), destiné à être fixé au support du stator (32), et comportant des moyens d'immobilisation du rotor (16) par rapport au stator (14),
- un plateau avant (54) de support du stator (14), destiné à être fixé au support du stator (32), et comportant des moyens d'immobilisation et de centrage du faux palier (38).

2. Equilibreuse avec outillage selon la revendication précédente, **caractérisés en ce que** le support de stator (38) comporte deux platines avant (66) et arrière (68) réglables verticalement et transversalement de manière indépendante et configurées pour supporter des extrémités avant et arrière dudit stator (14).

3. Equilibreuse avec outillage selon la revendication précédente, **caractérisés en ce que** le plateau arrière (52) présente la forme d'un disque percé d'une ouverture circulaire (70) en son centre, qui comporte :
- un pied inférieur (72) de fixation à la platine arrière (68),
- des moyens de fixation du stator (14) sur sa périphérie extérieure, et
- des bras radiaux (78), réglables radialement en coulissement, qui s'étendent radialement vers l'intérieur à partir des bords de l'ouverture circulaire (70) du plateau arrière (52) et qui comportent à leurs extrémités libres des touches axiales (80) qui sont configurées pour s'étendre axialement à l'intérieur d'un tourillon du rotor (16) et pour coopérer avec une portée intérieure (82) dudit tourillon pour l'immobiliser par rapport au stator (14).

4. Equilibreuse avec outillage selon l'une des revendications 2 ou 3, **caractérisés en ce que** le plateau avant (54) présente la forme d'un disque percé d'une ouverture circulaire (85) en son centre, et qui comporte :
- un pied inférieur (86) de fixation à la platine avant (66),
- des moyens de fixation du stator (14) sur sa périphérie extérieure, et
- au moins trois bras radiaux (91), réglables radialement en coulissement, qui s'étendent radialement vers l'intérieur à partir des bords de l'ouverture circulaire (85) du plateau avant (54), et qui comportent à leurs extrémités libres des portées (92) en forme de tronçons angulaires de cylindre qui sont complémentaires d'une périphérie extérieure du faux palier (38).

5. Equilibreuse avec outillage selon la revendication précédente, **caractérisés en ce que** le faux palier tubulaire (38) comporte une portée intérieure arrière (94) formant une piste du palier (40) de guidage du rotor, et sur sa périphérie, en arrière de sa portée extérieure (42) de fixation au manchon, une gorge extérieure (96) de réception des extrémités (92) des bras radiaux (91) du plateau avant (54).

6. Equilibreuse avec outillage selon l'une des revendications précédentes, **caractérisés en ce que** le manchon de guidage tubulaire (44) est réalisé en sous la forme de deux coques (44a, 44b) respectivement inférieure et supérieure, jointives selon un plan horizontal (P) et configurées pour être fixées l'une à l'autre, qui comportent chacune à leur extrémité arrière un logement (43) interne semi-cylindrique complémentaire de la portée avant (42) de fixation du faux palier (38), ladite coque inférieure (44a) comportant à l'extérieur de chacune de ses extrémités arrière (46) et avant (48) des moyens de fixation (100, 102) aux supports arrière (30) et avant (28) de maintien de l'équilibreuse (12), et, à l'intérieur de son extrémité avant (48), une platine transversale (104) porteuse de deux galets (108) d'axe longitudinal sur lesquels l'arbre du module est destiné à rouler, la position de ladite platine (104) étant réglable verticalement et transversalement par rapport à ladite extrémité avant de la coque inférieure (44a) du manchon de guidage (44).

7. Equilibreuse avec outillage selon la revendication précédente et ensemble d'étalonnage pour le réglage d'un outillage, **caractérisés en ce que** ledit ensemble d'étalonnage comporte un rotor étalon (17), de moment d'inertie et de balourd correspondant sensiblement au rotor (16) du module à équilibrer, comportant une masse (21) de rotor étalon et un arbre (19) de rotor étalon, et une bague d'adaptation (31) configurée pour recevoir une extrémité arrière de l'arbre (19) de rotor étalon (17) et pour être reçue dans le support arrière (30) de l'équilibreuse.

8. Procédé d'équilibrage du rotor étalon (17) d'une équilibreuse avec outillage et ensemble d'étalonnage selon la revendication précédente, **caractérisé en ce qu'**il comporte une première étape (ET'1) au cours de laquelle on insère le rotor étalon (17) dans la bague d'adaptation, une deuxième étape (ET'2) au cours de laquelle on dispose le rotor étalon (17) dans le support arrière (30) de l'équilibreuse (12) et au cours de laquelle on l'accouple au bloc d'entraînement (24), et une troisième étape (ET'3) au cours de laquelle on équilibre le rotor étalon (17).

9. Procédé de réglage d'un manchon tubulaire (44) et d'un support de stator (32) à l'aide d'un rotor étalon (17) qui appartiennent à une équilibreuse avec ouillage et ensemble d'étalonnage selon la revendication 7, ledit rotor étant équilibré selon le procédé de la revendication 8, **caractérisé en ce qu'**il comporte :
- une première étape (ET"1) au cours de laquelle on insère le rotor étalon (17) dans le faux palier (38),
- une deuxième étape (ET"2) au cours de laquelle on insère le faux palier (38) muni de l'arbre (19) de rotor étalon (17) dans le manchon de guidage tubulaire (44),
- une troisième étape (ET"3) au cours de laquelle on dépose le rotor étalon (17) muni du manchon de guidage tubulaire (44) dans les supports avant (28) et arrière (30) de l'équilibreuse (12),
- une quatrième étape (ET"4) au cours de laquelle on met en rotation le rotor étalon (17) pour déterminer son défaut d'axe et au cours de laquelle on corrige ledit défaut en réglant les positions transversale et horizontale de la platine (106) du manchon (44) de guidage tubulaire,
- une cinquième étape (ET"5) au cours de laquelle on démonte le rotor étalon (17) du faux palier (38) et le faux palier (38) du manchon de guidage (44),
- une sixième étape (ET"6) au cours de laquelle on assemble le plateau avant (54) de support du stator au faux palier (38),
- une septième étape (ET"7) au cours de laquelle on insère le rotor étalon (17) dans le faux palier (38),
- une huitième étape (ET"8) au cours de laquelle on assemble le stator (14) au plateau avant (54) et le plateau arrière (52) au stator (14) pour constituer un module étalon (11),
- une neuvième étape (ET"9) au cours de laquelle on assemble le manchon de guidage (44) au faux palier (38),
- une dixième étape (ET"10) au cours de laquelle on dépose le module étalon (11) équipé du manchon de guidage (44) sur les supports arrière (30) et avant (28) de maintien de l'arbre du module (11) et sur le support de stator (32),
- une onzième étape (ET"11) au cours de laquelle on règle les platines avant (66) et arrière (68) du support de stator (14) de manière à supporter les plateaux avant (54) et arrière (52) de support du stator (14) tout en permettant la libre rotation du rotor étalon (17) dans le stator (14) .

10. Procédé d'équilibrage d'un module (10) de turbomachine à l'aide d'une équilibreuse avec outillage selon l'une des revendications 1 à 6, **caractérisé en ce qu'**il comporte :
- une première étape (ET1) au cours de laquelle on assemble le plateau avant (54) au faux palier (38),
- une deuxième étape (ET2) au cours de laquelle on assemble le plateau arrière (52) de support du stator au stator (14) et à l'étage d'aubes (20),
- une troisième étape (ET3) au cours de laquelle on assemble le plateau arrière (52) de support de stator, le stator (14) et l'étage d'aubes (20) déjà assemblés au plateau avant (54) et au faux palier (38),
- une quatrième étape (ET4) au cours de laquelle on assemble le manchon de guidage (44) au faux palier (38),
- une cinquième étape (ET5) au cours de laquelle on dépose le module (10) équipé du manchon de guidage (44) sur les supports arrière (30) et avant (28) de maintien de l'arbre du module (10) et sur le support de stator (32),
- une sixième étape d'équilibrage (ET6) du module (10) dans l'équilibreuse (12).

11. Procédé d'équilibrage d'un module (10) de turbomachine à l'aide d'une équilibreuse avec outillage selon la revendication précédente, **caractérisé en ce qu'**au cours de la première étape (ET1) on assemble le plateau avant (54) de support du stator au faux palier (38) sur une table d'assemblage (126) comportant un plateau de montage (130) en forme de disque complémentaire du plateau avant (54) de support du stator, comportant une ouverture circulaire (132) en son centre, sur les bords de laquelle sont disposées au moins trois pattes (134) de centrage s'étendant axialement à partir dudit plateau de montage (130) et disposées selon un diamètre correspondant à celui d'une portée extérieure du faux palier (38), et **en ce qu'**au cours de ladite première étape (ET1), le faux palier est reçu entre les pattes de centrage (134) de la table d'assemblage puis on assure la coaxialité du plateau avant avec le faux palier (38) en réglant les bras (91) .

## Patentansprüche

1. Auswuchtvorrichtung mit einem Werkzeug zum Auswuchten eines Turbomaschinenmoduls (10) in der Auswuchtvorrichtung (12), wobei das Modul mindestens einen Stator (14) und einen Rotor (16) umfasst, der eine Welle (18) der Längsachse A, die konfiguriert ist, um durch ein Führungslager im Inneren des Stators geführt zu werden, und mindestens eine Schaufelstufe (20) umfasst, die mit einem Längsendabschnitt (22) der Welle (18) verbunden ist und die von dem Stator (14) umgeben ist und wobei die Auswuchtvorrichtung (12) mindestens, von vorne nach hinten, einen Antriebsblock (24) und einen Tisch (26) umfasst, der mit zwei vorderen (28) und hinteren (30) Trägern zum Halten der Welle (18) des Moduls (10) versehen ist, **dadurch gekennzeichnet, dass** das Werkzeug mindestens Folgendes umfasst:
- einen Statorträger (32), der dazu bestimmt ist, axial verstellbar auf dem Tisch (26) der Auswuchtvorrichtung (12) hinter den Trägern (28, 30) zum Halten der Welle (18) des Moduls (10) befestigt zu werden,
- ein rohrförmiges Blindlager (38), das konfiguriert ist, um ein Führungslager (40) des Rotors (16) in dem Stator (14) zu tragen, und das eine vordere Befestigungsfläche (42) umfasst, die konfiguriert ist, um aus dem Stator (14) herauszuragen,
- eine Führungsmuffe (44), die ein hinteres Ende (46) umfasst, das konfiguriert ist, um die vordere Befestigungsfläche (42) des Blindlagers (38) einzuschließen, und ein vorderes Ende (48), das interne Führungsmittel (50) für die Rotorwelle (18) umfasst, und die konfiguriert ist, um auf dem hinteren (30) und vorderen (28) Träger des Tisches (26) der Auswuchtvorrichtung (12) aufgenommen zu werden,
- eine hintere Platte (52) zum Tragen des Stators (14), die dazu bestimmt ist, am Träger des Stators (32) befestigt zu werden, und die Mittel zum Feststellen des Rotors (16) in Bezug auf den Stator (14) umfasst,
- eine vordere Platte (54) zum Tragen des Stators (14), die dazu bestimmt ist, am Träger des Stators (32) befestigt zu werden, und die Mittel zum Feststellen und zum Zentrieren des Blindlagers (38) umfasst.

2. Auswuchtvorrichtung mit Werkzeug nach dem vorstehenden Anspruch, **dadurch gekennzeichnet, dass** der Statorträger (38) zwei unabhängig voneinander vertikal und transversal einstellbare vordere (66) und hintere (68) Plattenträger umfasst, die konfiguriert sind, um das vordere und hintere Ende des Stators (14) zu tragen.

3. Auswuchtvorrichtung mit Werkzeug nach dem vorstehenden Anspruch, **dadurch gekennzeichnet, dass** die hintere Platte (52) die Form einer in ihrer Mitte von einer kreisförmigen Öffnung (70) durchbohrten Scheibe aufweist, die Folgendes umfasst:
- einen unteren Fuß (72) zur Befestigung an dem hinteren Plattenträger (68),
- Mittel zum Befestigen des Stators (14) an seinem Außenumfang, und
- radiale Arme (78), die radial gleitverstellbar sind, die sich von den Rändern der kreisförmigen Öffnung (70) der hinteren Platte (52) radial nach innen erstrecken und die an ihren freien Enden axiale Keile (80) aufweisen, die konfiguriert sind, um sich axial innerhalb eines Zapfens des Rotors (16) zu erstrecken und um mit einer inneren Lagerfläche (82) des Zapfens zusammenzuwirken, um ihn in Bezug auf den Stator (14) festzustellen.

4. Auswuchtvorrichtung mit Werkzeug nach einem der Ansprüche 2 oder 3, **dadurch gekennzeichnet, dass** die vordere Platte (54) die Form einer in ihrer Mitte von einer kreisförmigen Öffnung (85) durchbohrten Scheibe umfasst, und die Folgendes umfasst:
- einen inneren Fuß (86) zur Befestigung an dem vorderen Plattenträger (66),
- Mittel zum Befestigen des Stators (14) an seinem Außenumfang, und
- mindestens drei radiale Arme (91), die radial gleitverstellbar sind, die sich von den Rändern der kreisförmigen Öffnung (85) der vorderen Platte (54) radial nach innen erstrecken und die an ihren freien Enden Lagerflächen (92) in Form von Winkelzylinderabschnitten aufweisen, die zu einem Außenumfang des Blindlagers (38) komplementär sind.

5. Auswuchtvorrichtung mit Werkzeug nach dem vorstehenden Anspruch, **dadurch gekennzeichnet, dass** das rohrförmige Blindlager (38) eine hintere innere Lagerfläche (94), die eine Laufbahn des Rotorführungslagers (40) bildet, und an seinem Umfang hinter seiner äußeren Lagerfläche (42) zur Befestigung an der Muffe eine äußere Nut (96) zur Aufnahme der Enden (92) der radialen Arme (91) der vorderen Platte (54) umfasst.

6. Auswuchtvorrichtung mit Werkzeug nach einem der vorstehenden Ansprüche, **dadurch gekennzeichnet, dass** die rohrförmige Führungsmuffe (44) in Form von zwei Schalen (44a, 44b), einer unteren bzw. einer oberen, ausgeführt ist, die in einer horizontalen Ebene (P) miteinander verbunden und zur Befestigung aneinander konfiguriert sind, wobei jede von ihnen an ihrem hinteren Ende eine innere halbzylindrische Aufnahme (43) umfasst, die komplementär zur vorderen Lagerfläche (42) zur Befestigung des Blindlagers (38) ist, wobei die untere Schale (44a) außerhalb jedes ihrer hinteren (46) und vorderen (48) Enden Mittel (100, 102) zur Befestigung an den hinteren (30) und vorderen (28) Trägern zum Halten der Auswuchtvorrichtung (12) umfasst, und innerhalb ihres vorderen Endes (48) einen transversalen Plattenträger (104), der zwei Rollen (108) der Längsachse trägt, auf denen die Welle des Moduls abrollen soll, wobei die Position des Plattenträgers (104) in Bezug auf das vordere Ende der unteren Schale (44a) der Führungsmuffe (44) in vertikaler und transversaler Richtung einstellbar ist.

7. Auswuchtvorrichtung mit Werkzeug nach dem vorstehenden Anspruch und Kalibrieranordnung zum Einstellen eines Werkzeugs, **dadurch gekennzeichnet, dass** die Kalibrieranordnung einen Kalibrierrotor (17) umfasst, wobei das Trägheitsmoment und die Unwucht im Wesentlichen dem auszuwuchtenden Rotor (16) des Moduls entsprechen, umfassend eine Kalibrierrotormasse (21) und eine Kalibrierrotorwelle (19), und einen Adapterring (31), der konfiguriert ist, um ein hinteres Ende der Welle (19) des Kalibrierrotors (17) aufzunehmen und um in dem hinteren Träger (30) der Auswuchtvorrichtung aufgenommen zu werden.

8. Verfahren zum Auswuchten des Kalibrierrotors (17) einer Auswuchtvorrichtung mit Werkzeug und Kalibrieranordnung nach dem vorstehenden Anspruch, **dadurch gekennzeichnet, dass** es einen ersten Schritt (ET'1) umfasst, bei dem der Kalibrierrotor (17) in den Adapterring eingesetzt wird, einen zweiten Schritt (ET'2), bei dem der Kalibrierrotor (17) in den hinteren Träger (30) der Auswuchtvorrichtung (12) angeordnet wird und bei dem er mit dem Antriebsblock (24) gekoppelt wird, und einen dritten Schritt (ET'3), bei dem der Kalibrierrotor (17) ausgewuchtet wird.

9. Verfahren zum Einstellen einer rohrförmigen Muffe (44) und eines Statorträgers (32) mittels eines Kalibrierrotors (17), die zu einer Auswuchtvorrichtung mit Werkzeug und Kalibrieranordnung nach Anspruch 7 gehören, wobei der Rotor nach dem Verfahren von Anspruch 8 ausgewuchtet wird, **dadurch gekennzeichnet, dass** es Folgendes umfasst:
- einen ersten Schritt (ET"1), bei dem der Kalibrierrotor (17) in das Blindlager (38) eingesetzt wird,
- einen zweiten Schritt (ET"2), bei dem das Blindlager (38), versehen mit der Welle (19) des Kalibrierrotors (17) in die rohrförmige Führungsmuffe (44) eingesetzt wird,
- einen dritten Schritt (ET"3), bei dem der Kalibrierrotor (17), versehen mit der rohrförmigen Führungsmuffe (44) in den vorderen (28) und hinteren (30) Träger der Auswuchtvorrichtung (12) angeordnet wird,
- einen vierten Schritt (ET"4), bei dem der Kalibrierrotor (17) in Drehung versetzt wird, um seine Achsenfehler zu bestimmen, und bei dem dieser Fehler durch Einstellen der transversalen und horizontalen Positionen des Plattenträgers (106) der rohrförmigen Führungsmuffe (44) korrigiert wird,
- einen fünften Schritt (ET"5), bei dem der Kalibrierrotor (17) vom Blindlager (38) entfernt wird und das Blindlager (38) von der Führungsmuffe (44) entfernt wird,
- einen sechsten Schritt (ET"6), bei dem die vordere Platte (54) des Trägers des Stators an dem Blindlager (38) montiert wird,
- einen siebten Schritt (ET"7), bei dem der Kalibrierrotor (17) in das Blindlager (38) eingesetzt wird,
- einen achten Schritt (ET"8), bei dem der Stator (14) mit der vorderen Platte (54) und die hintere Platte (52) mit dem Stator (14) montiert wird, um ein Kalibriermodul (11) zu bilden,
- einen neunten Schritt (ET"9), bei dem die Führungsmuffe (44) an dem Blindlager (38) montiert wird,
- einen zehnten Schritt (ET"10), bei dem das mit der Führungsmuffe (44) ausgestattete Kalibriermodul (11) auf den hinteren (30) und vorderen (28) Träger zum Halten der Welle des Moduls (11) und auf den Statorträger (32) angeordnet wird,
- einen elften Schritt (ET"11), bei dem der vordere (66) und der hintere (68) Plattenträger des Trägers des Stators (14) so eingestellt werden, dass sie die vordere (54) und die hintere (52) Platte des Trägers des Stators (14) tragen, während sie die freie Drehung des Kalibrierrotors (17) im Stator (14) ermöglichen.

10. Verfahren zum Auswuchten eines Turbomaschinenmoduls (10) unter Verwendung einer Auswuchtvorrichtung mit Werkzeug nach einem der Ansprüche 1 bis 6, **dadurch gekennzeichnet, dass** es Folgendes umfasst:
- einen ersten Schritt (ET1), bei dem die vordere Platte (54) an dem Blindlager (38) montiert wird,
- einen zweiten Schritt (ET2), bei dem die hintere Platte (52) des Trägers des Stators an dem Stator (14) und an der Schaufelstufe (20) montiert wird,
- einen dritten Schritt (ET3), bei dem die hintere Platte (52) des Trägers des Stators, der Stator (14) und die Schaufelstufe (20), die bereits montiert sind, an der vorderen Platte (54) und an dem Blindlager (38) montiert werden,
- einen vierten Schritt (ET4), bei dem die Führungsmuffe (44) an dem Blindlager (38) montiert wird,
- einen fünften Schritt (ET5), bei dem das mit der Führungsmuffe (44) ausgestattete Kalibriermodul (10) auf dem hinteren (30) und vorderen (28) Träger zum Halten der Welle des Moduls (10) und auf den Statorträger (32) angeordnet wird,
- einen sechsten Auswuchtschritt (ET6) des Moduls (10) in der Auswuchtvorrichtung (12).

11. Verfahren zum Auswuchten eines Turbomaschinenmoduls (10) mittels einer Auswuchtvorrichtung mit Werkzeug nach dem vorstehenden Anspruch, **dadurch gekennzeichnet, dass** während des ersten Schritts (ET1) die vordere Platte (54) des Trägers des Stators an dem Blindlager (38) auf einem Montagetisch (126) montiert wird, der eine zur vorderen Platte (54) des Trägers des Stators komplementäre scheibenförmige Montageplatte (130) umfasst, die eine kreisförmigen Öffnung (132) in ihrer Mitteumfasst, an deren Rändern mindestens drei Zentrierlaschen (134) angeordnet sind, die sich axial von der Montageplatte (130) aus erstrecken und entlang eines Durchmessers angeordnet sind, der dem einer äußeren Lagerfläche des Blindlagers (38) entspricht, und dass während des ersten Schritts (ET1) das Blindlager zwischen den Zentrierlaschen (134) des Montagetisches aufgenommen wird, dann die Koaxialität der vorderen Platte mit dem Blindlager (38) durch Einstellen der Arme (91) sichergestellt wird.

## Claims

1. Balancer with a tool for balancing a turbine engine module (10) in the balancer (12), said module comprising at least one stator (14) and one rotor (16) comprising a shaft (18) of longitudinal axis A configured to be guided by a guiding bearing inside the stator and at least one blades stage (20) which is connected to a longitudinal end portion (22) of said shaft (18) and which is surrounded by said stator (14), and said balancer (12) comprising at least, from the front to the rear, a power drive unit (24) and a table (26) provided with two front (28) and rear (30) supports for maintaining the shaft (18) of the module (10), **characterised in that** said tool comprises at least:
- one stator support (32), intended to be fixed axially adjustably on the table (26) of the balancer (12) behind the supports (28, 30) for maintaining the shaft (18) of the module (10),
- a tubular false bearing (38), configured to support a guiding bearing (40) of the rotor (16) in the stator (14) and comprising a front fixing support (42) configured to extend outside of the stator (14),
- a guiding sleeve (44), comprising a rear end (46) configured to confine the front fixing support (42) of the false bearing (38), a front end (48) comprising inner guiding means (50) of the shaft (18) of the rotor, and which is configured to be received on the rear (30) and front (28) supports of the table (26) of the balancer (12),
- a rear support plate (52) of the stator (14), intended to be fixed to the support of the stator (32), and comprising means for immobilising the rotor (16) with respect to the stator (14),
- a front support plate (54) of the stator (14), intended to be fixed to the support of the stator (32), and comprising means for immobilising and centring the false bearing (38).

2. Balancer with tool according to the preceding claim, **characterised in that** the stator support (38) comprises two front (66) and rear (68) plates, vertically and transversally adjustable independently and configured to support the front and rear ends of said stator (14).

3. Balancer with tool according to the preceding claim, **characterised in that** the rear plate (52) has the shape of a disk pierced with a circular opening (70) in its centre, which comprises:
- a lower foot (72) for fixing to the rear plate (68),
- means for fixing the stator (14) on its outer periphery, and
- radial arms (78), radially adjustable by sliding, which extend radially inwards from the edges of the circular opening (70) of the rear plate (52) and which comprise at their free ends of the axial buttons (80) which are configured to extend axially inside a pin of the rotor (16) and to cooperate with an inner support (82) of said pin to immobilise it with respect to the stator (14).

4. Balancer with tool according to one of claims 2 or 3, **characterised in that** the front plate (54) has the shape of a disk pierced with a circular opening (85) in its centre, and which comprises:
- a lower foot (86) for fixing to the front plate (66),
- means for fixing the stator (14) on its outer periphery, and
- at least three radial arms (91), radially adjustable by sliding which extend radially inwards from the edges of the circular opening (85) of the front plate (54), and which comprise at their free ends, cylinder angular section-shaped supports (92) which are complementary to an outer periphery of the false bearing (38).

5. Balancer with tool according to the preceding claim, **characterised in that** the tubular false bearing (38) comprises a rear, inner support (94) forming a track of the bearing (40) for guiding the rotor, and on its periphery, behind its outer support (42) for fixing to the sleeve, an outer groove (96) for receiving the ends (92) of the radial arms (91) of the front plate (54).

6. Balancer with tool according to one of the preceding claims, **characterised in that** the tubular guiding sleeve (44) is produced in the form of two respectively lower and upper, contiguous shells (44a, 44b) along a horizontal plane (P) and configured to be fixed together, which each comprise, at their rear end, a semi-cylindrical, inner housing (43) complementary to the front support (42) for fixing to the false bearing (38), said lower shell (44a) comprising, outside of each of its rear (46) and front (48) ends, means for fixing (100, 102) to the rear (30) and front (28) supports for maintaining the balancer (12), and, inside its front end (48), a transversal plate (104) supporting two rollers (108) of longitudinal axis on which the shaft of the module is intended to roll, the position of said plate (104) being vertically and transversally adjustable with respect to said front end of the lower shell (44a) of the guiding sleeve (44).

7. Balancer with tool according to the preceding claim and calibration assembly for adjusting a tool, **characterised in that** said calibration assembly comprises a standard rotor (17), of moment of inertia and out-of-balance corresponding substantially to the rotor (16) of the module to be balanced, comprising a standard rotor mass (21) and a standard rotor shaft (19), and an adapter ring (31) configured to receive a rear end of the standard rotor (17) shaft (19) and to be received in the rear support (30) of the balancer.

8. Method for balancing a standard rotor (17) of a balancer with tool and calibration assembly according to the preceding claim, **characterised in that** it comprises a first step (ET'1), during which the standard rotor (17) is inserted in the adapter ring, a second step (ET'2), during which the standard rotor (17) is arranged in the rear support (30) of the balancer (12) and during which it is coupled with the power drive unit (24), and a third step (ET'3), during which the standard rotor (17) is balanced.

9. Method for adjusting a tubular sleeve (44) and a stator support (32) of a tool using a standard rotor (17) which belong to a balancer with tool and calibration assembly according to claim 7, said rotor being balanced according to the method of claim 8, **characterised in that** it comprises:
- a first step (ET"1), during which the standard rotor (17) is inserted in the false bearing (38),
- a second step (ET"2), during which the false bearing (38) equipped with the standard rotor (17) shaft (19) is inserted in the tubular guiding sleeve (44),- a third step (ET"3), during which the standard rotor (17) equipped with the tubular guiding sleeve (44) is arranged in the front (28) and rear (30) supports of the balancer (12),
- a fourth step (ET"4), during which the standard rotor (17) is rotated to determine its axis default and during which said default is corrected by adjusting the transversal and horizontal positions of the plate (106) of the tubular guiding sleeve (44),
- a fifth step (ET"5), during which the standard rotor (17) of the false bearing (38) is dismounted and the false bearing (38) is dismounted from the guiding sleeve (44),
- a sixth step (ET"6), during which the front support plate (54) of the stator is assembled to the false bearing (38),
- a seventh step (ET"7), during which the standard rotor (17) is inserted in the false bearing (38),
- an eighth step (ET"8), during which the stator (14) of the front plate (54) and the rear plate (52) are assembled to the stator (14) to constitute a standard module (11),
- a ninth step (ET"9), during which the guiding sleeve (44) is assembled to the false bearing (38),
- a tenth step (ET"10), during which the standard module (11) equipped with the guiding sleeve (44) is arranged on the rear (30) and front (28) supports for maintaining the module (11) and on the stator support (32),
- an eleventh step(ET"11), during which the front (66) and rear (68) plates of the stator support (14) are adjusted so as to support the front (54) and rear (52) support plates of the stator (14), while allowing the free rotation of the standard rotor (17) in the stator (14).

10. Method for balancing a turbine engine module (10) using a balancer with tool according to claims 1 to 6, **characterised in that** it comprises:
- a first step (ET1), during which the front plate (54) is assembled to the false bearing (38),
- a second step (ET2), during which the rear support plate (52) of the stator is assembled to the stator (14) and to the blades stage (20),
- a third step (ET3), during which the stator rear support plate (52), the stator (14), and the blades stage (20) already assembled, are assembled to the front plate (54) and to the false bearing (38),
- a fourth step (ET4), during which the guiding sleeve (44) is assembled to the false bearing (38),
- a fifth step (ET5), during which the module (10) equipped with the guiding sleeve (44) is arranged on the rear (30) and front (28) supports for maintaining the shaft of the module (10) and on the stator support (32),
- a sixth step of balancing (ET6) the module (10) in the balancer (12).

11. Balancing method of a turbine engine module (10) using a balancer with tool according to the preceding claim, **characterised in that** in the first step (ET1), the front plate (54) of the stator is assembled to the false bearing (38) on an assembly table (126) comprising a mounting plate (130) in the form of a disk complementary of the front support plate (54) of the stator, comprising a circular opening (132) in its centre, on the edges of which are arranged at least three centring legs (134) extending axially from said mounting plate (130) and arranged according to a diameter corresponding to that of an outer support of the false bearing (38) and **in that** in said first step (ET1) the false bearing is received between the centring legs (134) then the coaxiality of the front plate with the false bearing is checked by adjusting the arms (91).
